(19) Europäisches Patentamt
European Patent Office
Office européen des brevets

(11) Numéro de publication : **0 307 260 B1**

# (12) FASCICULE DE BREVET EUROPEEN

(45) Date de publication du fascicule du brevet : **21.11.91 Bulletin 91/47**

(51) Int. Cl.$^5$ : **C04B 35/58,** D01F 9/10, C08G 79/08, C07F 7/10

(21) Numéro de dépôt : **88401976.1**

(22) Date de dépôt : **29.07.88**

(54) **Nouveaux composés à base de nitrure de bore.**

(30) Priorité : **11.09.87 FR 8712588**

(43) Date de publication de la demande : **15.03.89 Bulletin 89/11**

(45) Mention de la délivrance du brevet : **21.11.91 Bulletin 91/47**

(84) Etats contractants désignés : **AT BE CH DE ES FR GB GR IT LI LU NL SE**

(56) Documents cités :
**GB-A- 2 163 761**
**US-A- 4 581 468**

(73) Titulaire : **RHONE-POULENC CHIMIE**
**25, quai Paul Doumer**
**F-92408 Courbevoie Cédex (FR)**

(72) Inventeur : **Mignani, Gérard**
**2, avenue des Frères Lumière**
**F-69008 Lyon (FR)**
Inventeur : **Lebrun, Jean-Jacques**
**24, rue Pierre Brunier**
**F-69300 Caluire et Cuire (FR)**

(74) Mandataire : **Dubruc, Philippe et al**
**RHONE-POULENC CHIMIE Service Brevets**
**Chimie 25, quai Paul-Doumer**
**F-92408 Courbevoie Cédex (FR)**

**EP 0 307 260 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention à trait à de nouvelles compositi ͻ céramiques à base de nitrure de bore.

Elle concerne également un procédé de préparation de telles compositions.

Elle concerne enfin, à titre d'application, l'utilisation de ces compositions dans la fabrication de matériaux composites contenant, entre autres, du nitrure de bore.

On sait que le nitrure de bore est un matériau de plus en plus recherché, en raison notamment de sa stabilité aux hautes températures, de sa résistance aux chocs thermiques, de sa grande inertie chimique et de sa très bonne conductivité thermique. D'autre part, sa faible conductivité électrique en fait un isolant de choix.

On connaît à l'heure actuelle divers procédés pour préparer du nitrure de bore.

L'un d'entre eux consiste à faire réagir en phase gazeuse du trichlorure de bore avec de l'ammoniac. On obtient ainsi une poudre fine de nitrure de bore, qu'il est possible de fritter pour obtenir des pièces massives.

Plus récemment, on a découvert qu'il était possible de préparer du niture de bore par pyrolyse de polymères précurseurs.

L'intérêt de la voie polymère réside surtout dans les possibilités de mise en forme de ce type de produit, et plus particulièrement pour l'obtention, après pyrolyse, de fibres en nitrure de bore.

Le problème est que le nitrure de bore obtenu par l'une ou l'autre des voies ci-dessus ne présente pas toujours les propriétés adéquates à certaines applications bien particulières.

Ainsi, plus précisément, dans le cas de la fabrication de produits céramiques composites à base de nitrure de bore et de composés siliciés, il serait souhaitable de pouvoir disposer d'un produit à base de nitrure de bore hautement compatible avec lesdits composés siliciés, de manière à obtenir des composites à propriétés améliorées.

L'un des buts poursuivis par la présente invention est donc de fournir un produit céramique à base de nitrure de bore hautement compatible avec les céramiques siliciées.

L'invention a également pour but de proposer des moyens simples, efficaces, économiques et de mise en oeuvre aisée, pour obtenir sous des formes les plus diverses (poudres, fils, fibres, articles moules, revêtements, pellicules, films, etc) ledit produit céramique à base de nitrure de bore.

A ces effets, l'invention propose tout d'abord un nouveau produit céramique essentiellement a base de nitrure de bore et qui est caractérisé en ce qu'il comprend des atomes de silicium majoritairement répartis dans la couche externe dudit produit.

Le produit céramique à base de nitrure de bore selon l'invention peut se présenter sous un aspect tout à fait quelconque ; il peut s'agir notamment d'un grain, d'une fibre ou de toute autre pièce de forme.

D'autre part, on entend par couche externe une épaisseur de matière, mesurée à partir de la surface du produit, de l'ordre de quelques centaines d'Angströms.

Par majoritairement, on entend que plus de 50% des atomes de silicium présents dans le produit céramique se trouvent dans ladite couche externe.

En outre, le produit selon l'invention répond à au moins l'une des caractéristiques suivantes :

— le nitrure de bore se présente essentiellement sous une forme cristalline de type hexagonale,
— le pourcentage en poids des atomes de silicium présents dans le produit céramique n'excède pas 10%,
— au moins 80% des atomes de silicium présents dans le produit céramique se trouvent dans une couche externe de 20 nm (200 Å),
— les atomes de silicium sont présents sous la forme de composés siliciés, notamment sous forme d'oxynitrure de silicium,
— ledit oxynitrure de silicium répond à la formule $Si_2N_2O$.

D'autre part, le produit selon l'invention présente une très bonne pureté. En effet, il ne contient que des traces de $B_2O_3$ (< 2% molaire) et de carbone (< 2% molaire), ces deux produits étant généralement préjudiciables pour la qualité des pièces en nitrure de bore.

De par sa composition même, le produit selon l'invention possède donc une très bonne compatibilité avec les céramiques siliciées, comme par exemple le nitrure de silicium, le carbure de silicium, l'oxynitrure de silicium, l'oxynitrure de silicium et d'aluminium, le borure de silicium et la silice, et ceci grâce aux propriétés d'interface BN/Si améliorées.

Un procédé de préparation du produit selon l'invention va maintenant être décrit.

Selon ce procédé, on pyrolyse sous atmosphère d'ammoniac et jusqu'à une température comprise entre 1000 et 2000°C, un précurseur organométallique obtenu par réaction de a) un mélange comprenant un trihalogénoborane (composé A) et un composé répondant à la formule I suivante (composé B) :

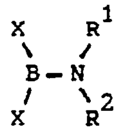

(I)

dans laquelle X représente un atome halogène et $R^1$ et $R^2$ des radicaux silylés, identiques ou différents, sur b) un composé comprenant au moins un groupement $NH_2$ (composé C).

Le composé A de départ généralement utilisé pour la préparation du précurseur est le trichloroborane, bien que tout autre halogénoborane puisse convenir, comme par exemple un trifluoro, un tribromo ou un triido-borane.

Le composé B est également un composé généralement chloré.

Les radicaux silylés $R^1$ et $R^2$ sont de préférence du type

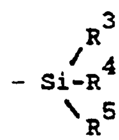

les radicaux $R^3$, $R^4$, et $R^5$ étant choisis, identiques ou différents, parmi l'atome d'hydrogène et les radicaux hydrocarbonés.

A titre de radicaux hydrocarbonés, ou peut citer les radicaux alkyles, cycloalkyles, aryles, arylalkyles, alkylaryles, alcenyles et alcynyles.

Plus précisément, parmi les radicaux alkyles convenant pour la présente invention, on peut citer à titre d'exemples les radicaux méthyle, éthyle, propyle, butyle, pentyle, hexyle, heptyle et octyle. Parmi les radicaux cycloalkyles, on peut citer les radicaux cyclopentyle, cyclohexyle et cycloheptyle, A titre de radicaux aryles : les radicaux phényle et naphtyle ; de radicaux arylalkyles : les radicaux benzyle et phénylethyle.

A titre de radicaux alcenyles, on peut citer plus particulièrement les radicaux vinyle, allyle, butenyle et pentenyle.

Enfin, on peut citer comme radicaux alcynyles, les radicaux éthynyle, propynyle et butynyle.

Selon un mode préférentiel de réalisation du procédé selon l'invention, les radicaux $R^1$ et $R^2$ du composé B sont des radicaux (trialkyl)silylés. Les radicaux (trimethyl) silylés conviennent particulièrement bien.

Tous les composés de formule (I) ci-dessus sont bien connus de l'état de la technique, et peuvent être préparés par tout moyen connu en soi.

Plus précisément, en ce qui concerne des radicaux $R^1$ et $R^2$ du type triorganosilylé, on pourra se reporter notamment aux travaux de JENNE et NIEDENZU (Inorganic Chemistry, 1964, 3, 68), de SUJISHII et WITZ (Journal of American Ceramic Society, 1957, 79, page 2447), ou bien encore de WANNAGAT (Angew Chemie International Edition, 3, 1964, page 633).

D'une manière générale, le composé B désiré peut être obtenu par action de $BCl_3$ sur

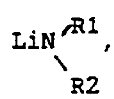,

avec des conditions de température et de rapports molaires convenables.

Concernant enfin les composés C (généralement appelés agents d'aminolyse) rentrant dans le cadre du procédé de préparation du précurseur, on peut citer l'ammoniac, les amines primaires, les diamines (hydrazine, alkylhydrazine, hydrazide, alkylenediamine...), les amides, les silylamines, etc...

On utilise toutefois de préférence des composés qui répondent à la formule (II) suivante :

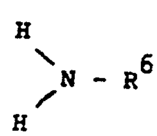

(II)

dans laquelle le radical $R^6$ est choisi parmi l'atome d'hydrogène, les radicaux hydrocarbonés et les radicaux

organosilylés et hydrogénoorganosilylés. Conviennent ainsi plus particulièrement :

- l'ammoniac ($R^6$ = atome d'hydrogène)
- les organoamines primaires ($R^6$ = radical alkyle, cycloalkyle, aryle, alkylaryle ou arylalkyle), telles que par exemple la méthylamine, l'éthylamine, la propylamine, la butylamine, la pentylamine, l'hexylamine, l'heptylamine et l'octylamine, la cyclopropylamine, la phenylamine...
- les silylamines, et plus particulièrement les triorganosilyamines comme la (triméthylsilyl)amine et la (triéthylsilyl)amine ou bien encore les (hydrogenodiorganosilyl)amines, comme par exemple l'(hydrogénodimethylsilyl)amine.

Les agents d'aminolyse préférés sont les alkylamines primaires et l'ammoniac.

Selon un mode de mise en oeuvre encore plus préféré, on opère avec l'ammoniac.

La réaction entre les composés A, B et C permettant d'aboutir au précurseur organoborique est appelé réaction de co-aminolyse.

Le schéma général de cette réaction du sein du milieu réactionnel est le suivant :

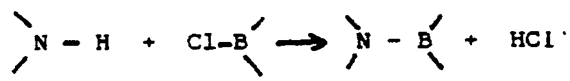

La réaction peut être opérée en masse, ou, de préférence, en milieu solvant organique (hexane, pentane, toluène...) et sous conditions anhydres.

On travaille généralement à la pression atmosphérique, bien que des pressions inférieures ou supérieures ne soient bien évidemment pas exclues.

D'autre part, les réactions d'aminolyse étant généralement assez exothermiques, on préfère opérer à basse température.

La durée de la réaction, suivant les quantités de réactifs introduites, peut varier de quelques minutes à plusieurs heures.

Le rapport molaire dans le mélange de départ entre le composé A et le composé B peut varier dans une très large mesure. D'une manière générale, on observe que plus le pourcentage du composé A augmente dans ce mélange, et plus le rendement pyrolytique en nitrure de bore du précurseur obtenu en fin de réaction s'élève. Selon un mode préféré de réalisation de l'invention, le rapport molaire A/B dans le mélange de départ est au moins de 1.

A l'issue de cette étape de réaction, on sépare le précurseur organoborique du milieu de réaction, notamment du chlorydrate d'ammonium formé, et ceci par tout moyen connu en soi, par exemple, par filtration, ou bien encore par extraction et décantation au moyen notamment d'une solution ammoniaque.

Le précurseur, selon les conditions opératoires, peut se présenter, à température ambiante, sous une forme allant d'une huile assez visqueuse ou très visqueuse jusqu'à l'état solide. Il est d'autre part soluble dans la plupart des solvants organiques usuels (hexane, toluène...) ce qui est très avantageux au niveau de ses possibilités de mise en forme.

Le précurseur ainsi récupéré, après éventuellement élimination du solvant puis séchage, est alors soumis à une pyrolyse sous ammoniac à une température comprise entre 1000 et 2000°C, de préférence comprise entre 1100 et 1500°C, de manière à obtenir un produit céramique à base de nitrure de bore conforme à la présente invention.

Le produit céramique peut se présenter sous plusieurs formes, et ceci selon les besoins de l'application désirée.

Selon un premier mode de réalisation, on pyrolyse simplement le précurseur organoborique de manière à obtenir le produit selon l'invention sous forme de poudre. Cette poudre, après éventuellement broyage, est alors mélangée avec une autre poudre céramique siliciée, par exemple une poudre de nitrure de silicium, puis on fritte ce mélange jusqu'à l'obtention d'un composite dense : nitrure de bore — nitrure de silicium.

Selon un deuxième mode de réalisation, le précurseur organoborique est, avant l'étape de pyrolyse, mis en forme.

Ainsi, le précurseur peut être filé au moyen d'une filière classique (après fusion éventuelle si le précurseur est initiallement à l'état solide) puis pyrolysé de manière à ce que, finallement, le produit selon l'invention se présente sous la forme d'une fibre de nitrure de bore.

Les fibres obtenues peuvent alors servir de structures de renforcement pour des matériaux composites à matrice céramique siliciée, du type nitrure de silicium ou autre.

Le précurseur peut également être étalé à la surface d'une pièce céramique siliciée sous la forme d'un

film ou d'une pellicule, de manière à obtenir après pyrolyse un matériau céramique silicié, tel que par exemple du nitrure de silicium, revêtu d'une couche de nitrure de bore.

Un exemple illustrant l'invention va maintenant être donné.

Exemple

1 — Préparation du précurseur organométallique

Dans un réacteur double enveloppe de 5 litres, on introduit sous azote 1,7 litre d'hexane sec. Le solvant est refroidi à −39°C et sont ajoutés alors 96,6 g de $BCl_3$ (0,824 mole) et 111,9 g de $Cl_2BN(SiMe_3)_2$ (0,463 mole). De l'ammoniac est ensuite ajouté (32 moles) en maintenant la température de réaction à environ −20°C. Instantanément, il se forme un précipité blanc (principalement du $NH_4Cl$). A la fin de la réaction, le mélange réactionnel est filtré, et le solide blanc est lavé à l'hexane. La concentration du filtrat permet de récupérer 63,2 g d'un produit blanc, constituant le précurseur désiré.

Le rendement isolé de la réaction de co-ammonolyse est de 55,6%.

Les caractéristiques du produit obtenu sont les suivantes :

$\overline{Mn}$ = 1500 (masse molaire moyenne en nombre)

$\overline{Mw}$ = 3200 (masse molaire moyenne en poids)

Pr = 120°C (point de ramollissement)

Rapport massique Si/B = 2 (déterminé par analyse élémentaire)

TGA (sous argon à 800°C) = 41,1%

2 — Pyrolyse du précurseur

La pyrolyse de 2,3639 g du précurseur a été conduite dans les conditions suivantes :

- balayage de $NH_3$,
- de 60°C à 400°C : vitesse de montée en température de 3°C $min^{-1}$
- palier de 30 minutes à 400°C,
- de 400°C à 1100°C : vitesse de montée en température de 10°C $min^{-1}$
- palier de 3 h à 1100°C.

On obtient alors un produit blanc avec un rendement de pyrolyse en poids de 30,5% (0,7208 g).

Les analyses suivantes permettent de déterminer la nature exacte du produit céramique obtenu :

a) Analyse Infra-Rouge (KBr) :

on observe les bandes caractéristiques du nitrure de bore (BN) à 1 375 $cm^{-1}$ et à 815 $cm^{-1}$

b) Analyse Raman :

on observe également les bandes caractéristiques du BN : 1370-1380 $cm^{-1}$

c) Analyse par diffraction aux rayons X :

elle indique que le nitrure de bore est present sous la forme cristalline hexagonale (par référence au fichier ASTM 34421)

d) Analyse E S C A :

Cette analyse met en évidence à la surface du produit (sur une profondeur de 20 nm (200 Å)) la présence de $Si_2N_2O$ et de traces de $B_2O_3$ ; le pourcentage molaire de silicium dans cette couche externe est alors de 27%. L'analyse à coeur montre une présence majoritaire de nitrure de bore ; le pourcentage molaire de silicium n'est plus alors que de 2%.

La nature des composés a été déterminée par déconvolution du spectre après étalonnage avec du BN, du $B_2O_3$ et du $Si_2N_2O$ de références.

e) Analyse élémentaire moyenne :

Cette analyse montre que la composition chimique molaire de la céramique est la suivante :

BN ≧ 95%
$Si_2N_2O$ ≦ 3%
$B_2O_3$ ≦ 0,5%
C ≦ 0,5%

## Revendications

1. Produit céramique essentiellement à base de nitrure de bore caractérisé en ce qu'il comprend des atomes de silicium majoritairement répartis dans la couche externe dudit produit.

2. Produit céramique selon la revendication 1 caractérisé en ce que le nitrure de bore est sous forme hexagonale.

3. Produit céramique selon l'une quelconque des revendications précédentes caractérisé en ce que le pourcentage en poids des atomes de silicium contenue dans ledit produit n'excède pas 10%.

4. Produit céramique selon l'une quelconque des revendications précédentes caractérisé en ce qu'au moins 80% des atomes de silicium contenus dans ledit produit sont répartis dans une couche externe de l'ordre de 20 nm (200 Å).

5. Produit céramique selon l'une quelconque des revendications précédentes caractérisé en ce que lesdits atomes de silicium sont présents sous la forme de composés siliciés.

6. Produit céramique selon la revendication 5 caractérisé en ce que les atomes de silicium sont présents sous la forme d'oxynitrure de silicium.

7. Produit céramique selon la revendication 6 caractérisé en ce que l'oxynitrure de silicium a pour formule $Si_2N_2O$.

8. Produit céramique selon l'une quelconque des revendications précédentes caractérisé en ce que le pourcentage molaire de $B_2O_3$ est inférieur à 2%.

9. Produit céramique selon l'une quelconque des revendications précédentes caractérisé en ce que le pourcentage molaire de carbone est inférieur à 2%.

10. Procédé de préparation d'un produit céramique tel que défini à l'une quelconque des revendications précédentes caractérisé en ce que l'on pyrolyse sous ammoniac et jusqu'à une température comprise entre 1000 et 2000°C, un précurseur organométallique obtenu par réaction de a) un mélange comprenant un trihalogénoborane (composé A) et un composé répondant à la formule I suivante (composé B) :

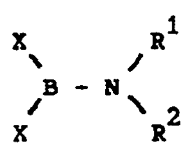
(I)

dans laquelle X représente un atome halogène et $R^1$ et $R^2$ des radicaux silylés, identiques ou différents, sur b) un composé comprenant au moins un groupement $NH_2$ (composé C).

11. Procédé selon la revendication 10 caractérisé en ce que ladite réaction s'effectue en masse.

12. Procédé selon la revendication 10 caractérisé en ce que ladite réaction s'effectue en solution dans un solvant organique anhydre.

13. Procédé selon l'une quelconque des revendications 10 à 12 caractérisé en ce que le composé A est le trichloroborane.

14. Procédé selon l'une quelconque des revendications 10 à 13 caractérisé en ce que X représente l'atome de chlore.

15. Procédé selon l'une quelconque des revendications 10 à 14 caractérisé en ce que les radicaux $R^1$ et $R^2$ sont des radicaux (trialkyl) silylés.

16. Procédé selon la revendication 15 caractérisé en ce que les radicaux $R^1$ et $R^2$ sont des radicaux (triméthyl) silylés.

17. Procédé selon l'une quelconque des revendications 10 à 16 caractérisé en ce que le composé C répond à la formule (II) suivante :

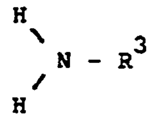 (II)

dans laquelle le radical $R^3$ est choisi parmi l'atome d'hydrogène, les radicaux alkyles, cycloalkyles, aryles, alkylaryles, arylalkyles, alcenyles, alcynyles et les radicaux organosilylés et hydrogénoorganosilylés.

18. Procédé selon la revendication 17 caractérisé en ce que le radical $R^3$ est choisi parmi l'hydrogène et les radicaux alkyles.

19. Procédé selon la revendication 18 caractérisé en ce que le radical $R^3$ est l'atome d'hydrogène.

20. Procédé selon l'une quelconque des revendications 10 à 19 caractérisé en ce que, avant sa pyrolyse, le précurseur organométallique est d'abord mis en forme.

21. Procédé selon la revendication 20 caractérisé en ce que ladite mise en forme consiste en un filage pour obtenir des fibres.

22. Procédé selon la revendication 20 caractérisé en ce que ladite mise en forme consiste à revêtir un support.

23. Utilisation d'un produit céramique tel que défini à l'une quelconque des revendications 1 à 9 pour la fabrication de matériaux céramiques composites à base de nitrure de bore et de composés siliciés du type notamment nitrure de silicium, carbure de silicium, oxynitrure de silicium, oxynitrure de silicium et d'aluminium, borure de silicium et silice.

**Claims**

1. Ceramic product essentially based on boron nitride, characterized in that it comprises silicon atoms predominantly distributed in the outer layer of the said product.

2. Ceramic product according to claim 1, characterized in that the boron nitride is in hexagonal form.

3. Ceramic product according to either of the preceding claims, characterized in that the percentage by weight of silicon atoms contained in the said product does not exceed 10%.

4. Ceramic product according to any one of the preceding claims, characterized in that at least 80% of the silicon atoms contained in the said product are distributed in an outer layer of the order of 20 nm (200 Å).

5. Ceramic product according to any one of the preceding claims, characterized in that the said silicon atoms are present in the form of silicon compounds.

6. Ceramic product according to claim 5, characterized in that the silicon atoms are present in the form of silicon oxynitride.

7. Ceramic product according to claim 6, characterized in that the silicon oxynitride is of the formula $Si_2N_2O$.

8. Ceramic product according to any one of the preceding claims, characterized in that the molar percentage of $B_2O_3$ is less than 2%.

9. Ceramic product according to any one of the preceding claims, characterized in that the molar percentage of carbon is less than 2%.

10. Process for preparing a ceramic product as defined in any one of the preceding claims, characterized in that an organometallic precursor, obtained by the reaction of (a), a mixture comprising a trihaloborane (compound A) and a compound corresponding to the following formula I (compound B) :

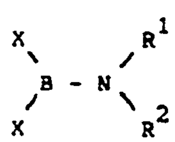 (I)

in which X denotes a halogen atom and $R^1$ and $R^2$, identical or different, silyl radicals with (b) a compound comprising at least one $NH_2$ group (compound C), is pyrolysed under ammonia and up to a temperature of between 1,000 and 2,000°C.

11. Process according to claim 10, characterized in that the said reaction is performed in the bulk.

12. Process according to claim 10, characterized in that the said reaction is performed in solution in an anhydrous organic solvent.

13. Process according to any one of claims 10 to 12, characterized in that the compound A is

trichloroborane.

14. Process according to any one of claims 10 to 13, characterized in that X denotes a chlorine atom.

15. Process according to any one of claims 10 to 14, characterized in that the radicals $R^1$ and $R^2$ are (trialkyl)silyl radicals.

16. Process according to claim 15, characterized in that the radicals $R^1$ and $R^2$ are (trimethyl)silyl radicals.

17. Process according to any one of claims 10 to 16, characterized in that the compound C corresponds to the following formula (II) :

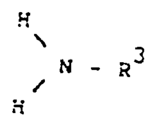 (II)

in which the radical $R^3$ is chosen from a hydrogen atom, alkyl, cycloalkyl, aryl, alkylaryl, arylalkyl, alkenyl and alkynyl radicals and organosilyl and hydrogenoorganosilyl radicals.

18. Process according to claim 17, characterized in that the radical $R^3$ is chosen from hydrogen and alkyl radicals.

19. Process according to claim 18, characterized in that the radical $R^3$ is a hydrogen atom.

20. Process according to any one of claims 10 to 19, characterized in that, before its pyrolysis, the organometallic precursor is first shaped.

21. Process according to claim 20, characterized in that the said shaping consists in spinning to obtain fibres.

22. Process according to claim 20, characterized in that the said shaping consists in coating a support.

23. Use of a ceramic product as defined in any one of claims 1 to 9, for the manufacture of composite ceramic materials based on boron nitride and on silicon compounds of the type, in particular, comprising silicon nitride, silicon carbide, silicon oxynitride, silicon aluminium oxynitride, silicon boride and silica.

## Patentansprüche

1. Keramisches Produkt im wesentlichen auf der Basis von Bornitrid, dadurch **gekennzeichnet**, daß es Siliciumatome enthält, die überwiegend in der Außenschicht des Produktes verteilt sind.

2. Keramisches Produkt nach Anspruch 1, dadurch **gekennzeichnet**, daß das Bornitrid in hexagonaler Form vorliegt.

3. Keramisches Produkt nach einem der vorangehenden Ansprüche, dadurch **gekennzeichnet**, daß der Gehalt in Gewichtsprozent an in dem Produkt enthaltenen Siliciumatomen nicht mehr als 10% ausmacht.

4. Keramisches Produkt nach einem der vorangehenden Ansprüche, dadurch **gekennzeichnet**, daß mindestens 80% der in diesem Produkt enthaltenen Siliciumatome in einer 20 nm (200 Å) starken Außenschicht verteilt sind.

5. Keramisches Produkt nach einem der vorangehenden Ansprüche, dadurch **gekennzeichnet**, daß die Siliciumatome in Form von siliciumhaltigen Verbindungen vorhanden sind.

6. Keramisches Produkt nach Anspruch 5, dadurch **gekennzeichnet**, daß die Siliciumatome in Form von Siliciumoxynitrid vorhanden sind.

7. Keramisches Produkt nach Anspruch 6, dadurch **gekennzeichnet**, daß das Siliciumoxynitrid der Formel $Si_2N_2O$ entspricht.

8. Keramisches Produkt nach einem der vorangehenden Ansprüche, dadurch **gekennzeichnet**, daß der Gehalt in Mol-% an $B_2O_3$ weniger als 2% ausmacht.

9. Keramisches Produkt nach einem der vorangehenden Ansprüche, dadurch **gekennzeichnet**, daß der Gehalt in Mol-% an Kohlenstoff weniger als 2% ausmacht.

10. Verfahren zur Herstellung eines keramischen Produktes wie in einem der vorangehenden Ansprüche definiert, dadurch **gekennzeichnet**, daß man unter Ammoniak und bis zu einer Temperatur im Bereich von 1000 bis 2000°C einen metallorganischen Vorläufer pyrolysiert, der durch Reaktion von (a), einem Gemisch, das ein Trihalogenboran (Verbindung A) und eine Verbindung der folgenden Formel I (Verbindung B) :

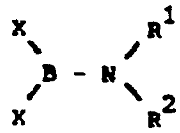

(I)

in der X ein Halogenatom bedeutet und $R^1$ und $R^2$ gleiche oder verschiedene Silylreste sind, umfaßt, mit (b), einer Verbindung, die mindestens eine $NH_2$-Gruppe (Verbindung C) enthält, erhalten worden ist.

11. Verfahren nach Anspruch 10, dadurch **gekennzeichnet**, daß die Reaktion in Masse erfolgt.

12. Verfahren nach Anspruch 10, dadurch **gekennzeichnet**, daß die Reaktion in Lösung in einem organischen wasserfreien Lösungsmittel erfolgt.

13. Verfahren nach einem der Ansprüche 10 bis 12, dadurch **gekennzeichnet**, daß die Verbindung A Trichlorboran ist.

14. Verfahren nach einem der Ansprüche 10 bis 13, dadurch **gekennzeichnet**, daß X für ein Chloratom steht.

15. Verfahren nach einem der Ansprüche 10 bis 14, dadurch **gekennzeichnet**, daß die Reste $R^1$ und $R^2$ (Trialkyl)silylreste sind.

16. Verfahren nach Anspruch 15, dadurch **gekennzeichnet**, daß die Reste $R^1$ und $R^2$ (Trimethyl)silylreste sind.

17. Verfahren nach einem der Ansprüche 10 bis 16, dadurch **gekennzeichnet**, daß die Verbindung C der folgenden Formel (II) :

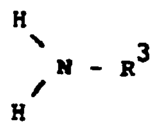

(II)

entspricht, in der der Rest $R^3$ unter dem Wasserstoffatom, den Alkul-, Cycloalkyl-, Aryl-, Alkylaryl-, Arylalkyl-, Alkenyl-, Alkinylresten und den Organosilyl- und Hydrogenorganosilyl- resten ausgewählt ist.

18. Verfahren nach Anspruch 17, dadurch **gekennzeichnet**, daß der Rest $R^3$ unter Wasserstoff und Alkylresten ausgewählt ist.

19. Verfahren nach Anspruch 18, dadurch **gekennzeichnet**, daß der Rest $R^3$ ein Wasserstoffatom ist.

20. Verfahren nach einem der Ansprüche 10 bis 19, dadurch **gekennzeichnet**, daß man den metallorganischen Vorläufer vor seiner Pyrolyse einer Formgebung unterwirft.

21. Verfahren nach Anspruch 20, dadurch **gekennzeichnet**, daß die Formgebung in einem Verspinnen besteht, um Fasern zu erhalten.

22. Verfahren nach Anspruch 20, dadurch **gekennzeichnet**, daß die Formgebung im Überziehen eines Trägers besteht.

23. Verwendung eines keramischen Produktes, wie in einem der Ansprüche 1 bis 9 definiert, zur Herstellung von keramischen Verbundwerkstoffen auf der Basis von Bornitrid sowie von siliciumhaltigen Verbindungen, vor allem vom Typ Siliciumnitrid, Siliciumcarbid, Siliciumoxynitrid, Silicium-aluminiumoxynitrid, Siliciumborid und Kieselsäure,